Europäisches Patentamt

(19) European Patent Office

Office européen des brevets

(11) Publication number : **0 352 829 B1**

(12) **EUROPEAN PATENT SPECIFICATION**

(45) Date of publication of patent specification :
16.09.92 Bulletin 92/38

(51) Int. Cl.⁵ : **A23G 9/02**, A23G 9/20,
C01B 31/20

(21) Application number : **89201490.3**

(22) Date of filing : **09.06.89**

(54) **Frozen product and method of making it.**

(30) Priority : **14.06.88 GB 8814075**

(43) Date of publication of application :
**31.01.90 Bulletin 90/05**

(45) Publication of the grant of the patent :
**16.09.92 Bulletin 92/38**

(84) Designated Contracting States :
**AT BE CH DE ES FR GB GR IT LI NL SE**

(56) References cited :
EP-A- 0 201 143
EP-A- 0 336 501
GB-A- 1 050 213
GB-A- 1 095 004
US-A- 4 393 660
US-A- 4 398 394
US-A- 4 398 395

(73) Proprietor : **UNILEVER N.V.**
**Burgemeester s'Jacobplein 1 P.O. Box 760**
**NL-3000 DK Rotterdam (NL)**
(84) **BE CH DE ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Bee, Rodney David**
**10 Stevenson Court Eaton Ford**
**St. Neots Cambs. PE19 3LF (GB)**

(74) Representative : **Roscoe, Brian Corrie et al**
**UNILEVER PLC Patents Division Colworth**
**House Sharnbrook**
**Bedford MK44 1LQ (GB)**

EP 0 352 829 B1

## Description

Effervescent frozen products and their manner of manufacturing are known from EP-A-201 143, involving the incorporation of $CO_2$-hydrate clathrate into partly frozen or cooled ice mixes.

This document discloses a frozen product comprising a mixture of water, sweetener, flavour, an edible gas-hydrate clathrate, protein and, if required, stabilizer, emulsifier, fat and/or air and a method of preparing a frozen product comprising combining ice particles which contain gas-hydrate clathrate and an at least partly fluid mixture of water, sweetener, flavour, protein and, if required, stabilizer, emulsifier, and/or air.

An object of the invention is to provide frozen confectionery products having different eating characteristics, such as taste, from what was known and to provide a product and a process more suited for several sensitive food ingredients such as proteins.

In the continuing development of different compositions, tastes, structures and shapes, it was found that different tastes could be realized by using $N_2O$ instead of at least part of the $CO_2$ used. Moreover, $N_2O$ clathrate is more compatible with several sensitive food ingredients such as proteins.

Accordingly this invention relates to a new frozen product comprising a mixture of water, sweetener, flavour, an edible gas-hydrate clathrate, protein and, if required, stabilizer, emulsifier, fat and/or air, characterized in $N_2O$ being at least part of the gas in the gas-hydrate clathrate.

Because of $N_2O$ hydrate clathrate being more compatible with proteins the gas hydrate clathrate contained in this product consists of $N_2O$ hydrate clathrate only.

The invention relates to a method of preparing a frozen product comprising combining ice particles which contain gas-hydrate clathrate and an at least partly fluid mixture of water, sweetener, flavour, protein and, if required, stabilizer, emulsifier and/or air, which method is characterized in that ice particles which $N_2O$ hydrate clathrate are mixed with said mixture, having a temperature at which no ice melts from said particles.

This method results in a frozen product wherein the $N_2O$ containing hydrate clathrate is contained as discrete particles.

In this connection reference is being made to US-A-4,393,660 disclosing the preparation of solid gas hydrates which can be either made from pure water or from aqueous solutions such as beverages and various materials including sugar, colour, flavour, acidulents and the like. A great many gases may be used according to this document including hydrogen sulphides, methylene chloride, helium, argon, krypton, neon, carbon monoxide, carbon dioxyde, nitrous oxide and chlorine; the latter three being preferred although carbon dioxide only is exemplified both for the manufacture and the application of the hydrate.

The invention will be exemplified by the following example.

## EXAMPLE

An ice mix containing :

| | | |
|---|---|---|
| fat | 10 | % by weight |
| msnf (milk solids-non fatty) | 10 | " " |
| sugar | 18 | " " |
| cocoa | 2.5 | " " |
| chocolate liquor | 1.5 | " " |
| stabilizer | 0.2 | " " |
| water to | 100 | " " |

is processed in a usual manner and finally whipped and frozen in a scraped-wall heat exchanger to -5°C to prepare a creamy, soft-frozen chocolate ice mass. Particulate $N_2O$ clathrate having a particle size of from 0.5 to 3 mm is admixed in an amount of 10% by weight to the creamy chocolate ice, which is thereafter stored below -20°C.

## Claims

1.    Frozen product comprising a mixture of water, sweetener, flavour, an edible gas-hydrate clathrate, protein and, if required, stabilizer, emulsifier, fat and/or air, characterized in $N_2O$ forming at least part of the gas in the clathrate.

2. A frozen product according to claim 1, characterized in that the gas hydrate clathrate consists of $N_2O$ clathrate.

3. A frozen confection according to claim 1 or 2, characterized in that the $N_2O$ containing hydrate clathrate is contained in that product as discrete particles.

4. A method of preparing a frozen confection comprising combining ice particles which contain gas-hydrate clathrate and an at least partly fluid mixture of water, sweetener, flavour, protein and, if required, stabilizer, emulsifier, and/or air, characterized in that ice particles which contain $N_2O$ hydrate clathrate are mixed with said mixture, having a temperature at which no ice will melt from said particles.

**Patentansprüche**

1. Gefrorenes Produkt umfassend eine Mischung von Wasser, Süßstoff, Geschmacksstoff, eines eßbaren Gas-Hydratclathrats, Protein und, wenn erforderlich, Stabilisator, Emulgator, Fett und/oder Luft, dadurch gekennzeichnet, daß $N_2O$ zumindest einen Teil des Gases im Clathrat ausmacht.

2. Gefrorenes Produkt nach Anspruch 1, dadurch gekennzeichnet, daß das Gas-Hydratclathrat aus $N_2O$-Clathrat besteht.

3. Gefrorenes Eiskonfekt nach Anspruch 1 oder 2, dadurch gekennzeichnet, daß das $N_2O$-haltige Hydratclathrat in diesem Produkt in Form einzelner Teilchen enthalten ist.

4. Verfahren zum Herstellen eines gefrorenen Konfekts umfassend das Vereinigen von Gas-Hydratclathrat enthaltenden Eisteilchen und einer zumindest teilweise fluiden Mischung von Wasser, Süßstoff, Geschmacksstoff, Protein und, wenn erforderlich, Stabilisator, Emulgator und/oder Luft, dadurch gekennzeichnet, daß $N_2O$-Hydratclathrat enthaltende Eisteilchen mit dieser Mischung gemischt werden, die eine Temperatur aufweist, bei der kein Eis von den Teilchen schmilzt.

**Revendications**

1. Un produit congelé comprenant un mélange d'eau, d'édulcorant, d'agent de sapidité, un composé d'insertion comestible d'hydrate gazeux, de la protéine et, si nécessaire, un agent de stabilisation, un émulsifiant, de la matière grasse et/ou de l'air, caractérisé en ce que $N_2O$ forme au moins une partie du gaz dans le composé d'insertion.

2. Un produit congelé selon la revendication 1, caractérisé en ce que le composé d'insertion d'hydrate gazeux est formé d'un composé d'insertion $N_2O$.

3. Une friandise congelée selon la revendication 1 ou 2, caractérisée en ce que le composé d'insertion d'hydrate contenant du $N_2O$ est contenu dans ce produit sous forme de particules discrètes.

4. Un procédé pour la préparation d'une friandise congelée comprenant le fait de combiner des particules de glace contenant un composé d'insertion d'hydrate gazeux et un mélange au moins partiellement liquide d'eau, d'édulcorant, d'agent de sapidité, de protéine et, si nécessaire, d'agent de stabilisation, d'émulsifiant et/ou d'air, caractérisé en ce que les particules de glace contenant le composé d'insertion d'hydrate de $N_2O$ sont mélangées audit mélange, ayant une température à laquelle la glace ne fondra pas à partir desdites particules.